# EUROPEAN PATENT APPLICATION

(11) **EP 3 346 591 A1**
(43) Date of publication of application: **11.07.2018**
(21) Application number: 16841618.8
(22) Date of filing: 24.08.2016
(51) Int. Cl.: H02K 33/18, F04B 35/04, F04B 39/00, H02K 7/14

(54) **VIBRATION TYPE COMPRESSOR**

(30) Priority: 31.08.2015 JP 2015170746
(71) Applicant: Sawafuji Electric Co., Ltd., Gunma 370-0344 (JP)
(72) Inventor: YOSHIHARA Junji, Ota-shi Gunma 370-0344 (JP); HOMMA Toshinari, Ota-shi Gunma 370-0344 (JP); TOKIZAKI Hiroyuki, Ota-shi Gunma 370-0344 (JP)
(74) Representative: Weickmann & Weickmann PartmbB
(86) International application number: PCT/JP2016/074680
(87) International publication number: WO 2017/038586

(57) **Abstract**

A vibration type compressor is provided in which a piston supported on a casing having a yoke pipe so as to be movable back and forth via a pair of resonance springs is slidably fitted into a cylinder that is coaxially and fixedly provided in the casing, and a drive coil that is disposed coaxially with the piston in a magnetic field is linked to the piston, wherein a disk-shaped linking plate (54) made of a metal and fixedly provided on the piston (21) prior to being joined to a bobbin (53) is coaxially mold bonded to the bobbin (53), made of a synthetic resin, supporting the drive coil (24), and a pair of terminals (61, 62) that have an abutment connecting portion (61a, 62a) and are individually connected to opposite end parts of the drive coil (24) are joined so that the abutment connecting portions (61a, 62a) face opposite sides in an axial direction of the bobbin (53), the resonance springs (22, 23), which are made of metal, functioning as a conductive member and abutting against the abutment connecting portions (61a, 62a) respectively. Thus, it is possible to enhance the precision of assembly while enabling the coaxial precision of the drive coil and the piston to be easily enhanced.

## Description

### TECHNICAL FIELD

The present invention relates to a vibration type compressor including a casing that has a cylindrical yoke pipe, a cylindrical cylinder that is coaxially and fixedly provided in the casing, a piston that is slidably fitted into the cylinder, a pair of resonance springs that support the piston on the casing so as to be movable back and forth, and a drive coil that is disposed coaxially with the piston in a magnetic field and is linked to the piston.

### BACKGROUND ART

Such a vibration type compressor is already known from Patent Document 1, etc., and in this arrangement a bobbin, which is made of a metal in order to perform a function as an electrical current path, is used for winding around, and this bobbin is linked to a piston.

### RELATED ART DOCUMENTS

### PATENT DOCUMENTS

Patent Document 1: Japanese Patent Application Laid-open No. 8-331804

### SUMMARY OF THE INVENTION

### PROBLEMS TO BE SOLVED BY THE INVENTION

The bobbin of the vibration type compressor disclosed in Patent Document 1 above is formed so as to integrally have a flange portion coaxially having a connection portion fixed to one end part of the piston, and a coil yoke piece connected to a plurality of locations, in the peripheral direction, of the flange portion, a drive coil is wound around the plurality of coil yoke pieces, and an insulating member is fitted onto a portion of the coil yoke piece where insulation is required. In accordance with such a bobbin, it is necessary to carry out winding of the drive coil in a state in which a cylindrical jig is inserted into the plurality of coil yoke pieces in order to ensure the strength and, moreover, a step of winding around the insulating member is carried out manually. When joining the bobbin to the piston by welding, the axis of the piston and the axis of the drive coil become displaced, it is necessary to carry out adjustment in order to enhance the coaxial precision, and there is a limit to enhancing the operational efficiency.

The present invention has been accomplished in light of such circumstances, and it is an object thereof to provide a vibration type compressor that can enhance the precision of assembly while enabling the coaxial precision of a drive coil and a piston to be easily enhanced.

### MEANS FOR SOLVING THE PROBLEMS

In order to attain the above object, according to a first aspect of the present invention, there is provided a vibration type compressor including a casing that has a cylindrical yoke pipe, a cylindrical cylinder that is coaxially and fixedly provided in the casing, a piston that is slidably fitted into the cylinder, a pair of resonance springs that support the piston on the casing so as to be movable back and forth, and a drive coil that is disposed coaxially with the piston in a magnetic field and is linked to the piston, characterized in that a disk-shaped linking plate made of a metal and fixedly provided on an end part, on a side opposite to the cylinder, of the piston prior to being joined to a bobbin is coaxially mold bonded to the bobbin, made of a synthetic resin, supporting the drive coil, and coaxially surrounded by the yoke pipe, and a pair of terminals that have an abutment connecting portion and are individually connected to opposite end parts of the drive coil are joined so that the abutment connecting portions face opposite sides in an axial direction of the bobbin, the resonance springs, which are made of metal, functioning as a conductive member and abutting against the abutment connecting portions respectively.

Further, according to a second aspect of the present invention, in addition to the first aspect, two groups of lead-holding parts formed from a plurality, at least a pair, of projections are provided on an outer face of the bobbin so that opposite end parts of the drive coil can be inserted into and retained by the lead-holding parts, and a coil connecting portion is disposed so as to correspond to the lead-holding portions, the coil connecting portion being formed on each of the pair of terminals so that the end portion of the drive coil retained by the lead-holding part can be joined by soldering to the coil connecting portion.

According to a third aspect of the present invention, in addition to the first or second aspect, a permanent magnet for forming the magnetic field is a dysprosium-less magnet and is held in the axial direction between a yoke bottom and a core pole, the yoke bottom being joined to one end part of the yoke pipe and having part thereof inserted into the bobbin and the core pole being disposed within the bobbin so that one of the pair of resonance springs is disposed between the core pole and the bobbin, and the cylinder extends coaxially through the core pole, the permanent magnet and the yoke bottom and is fixed to the yoke bottom.

Moreover, according to a fourth aspect of the present invention, in addition to any one of the first to third aspects, the resonance spring is a coil spring formed from a wire rod having an egg-shaped or elliptical cross section.

### EFFECTS OF THE INVENTION

In accordance with the first aspect of the present invention, since the disk-shaped linking plate, which is made of a metal and is fixedly provided on an end part, on the side opposite to the cylinder, of the piston is coaxially mold bonded to the bobbin, which is made of a synthetic resin, and the linking plate is fixedly provided on the piston prior to being joined to the bobbin, it is possible to easily enhance the coaxial precision between the piston and the bobbin supporting the drive coil, and it is unnecessary to carry out adjustment for improving the coaxial precision. Furthermore, since the bobbin is made of a synthetic resin, it is unnecessary to employ an insulating member, which would be required if the bobbin were made of a metal, the number of components decreases, and the number of operating steps can be reduced due to an operation of assembling the insulating member being unnecessary. Moreover, since the pair of terminals individually connected to the opposite end parts of the drive coil are joined to the bobbin so that the abutment connecting portions face opposite sides in the axial direction, the resonance springs, which are made of a metal and function as conductive members, abutting against the abutment connecting portions, it is possible to easily ensure the passage of an electrical current to the drive coil. Furthermore, in the case of a metallic bobbin there would be an eddy current loss within the metal due to electromagnetic field linkage by the drive coil, but it is possible to suppress the occurrence of such an eddy current loss.

Moreover, in accordance with the second aspect of the present invention, since the two groups of lead-holding parts, formed from the plurality, at least a pair, of projections are provided on one end face in the axial direction of the bobbin so that the opposite end parts of the drive coil can be inserted thereinto and retained thereby, and the coil connecting portions, which are each formed on the pair of terminals so that the end portions of the drive coil can be joined by soldering thereto, are disposed on the one end face in the axial direction of the bobbin so as to correspond to the lead-holding portions, when joining the opposite end parts of the drive coil to the pair of terminals after completing winding of the drive coil around the bobbin, it is unnecessary to bind the end portions of the drive coil using thread and it is possible to carry out the joining operation easily in a short period of time.

In accordance with the third aspect of the present invention, the permanent magnet for forming the magnetic field is a dysprosium-less magnet, the permanent magnet is held in the axial direction between the core pole and the yoke bottom joined to one end part of the yoke pipe, and it is therefore possible to reduce the radial dimension of the casing by making it unnecessary to ensure that there is a space having a large dimension in the radial direction of the casing for disposing the permanent magnet.

Furthermore, in accordance with the fourth aspect of the present invention, due to the resonance spring being a coil spring having an egg-shaped or elliptical cross section for the wire rod, it is possible to decrease the maximum stress occurring in the wire rod when it flexes compared with one having a circular cross section, which makes it possible to shorten the axial length of the resonance spring, thus contributing to making the axial dimension of the vibration type compressor small.

### BRIEF DESCRIPTION OF DRAWINGS

[FIG. 1] FIG. 1 is a vertical sectional view of a vibration type compressor. (first embodiment)
[FIG. 2] FIG. 2 is an exploded perspective view of a yoke bottom, a permanent magnet, a pole core and a yoke pipe. (first embodiment)
[FIG. 3] FIG. 3 is an exploded perspective view of a suction valve, a piston, a linking plate, a bobbin, a terminal and a drive coil. (first embodiment)
[FIG. 4] FIG. 4 is a perspective view showing the bobbin in a state in which the drive coil is wound around it. (first embodiment)
[FIG. 5] FIG. 5 is an enlarged view of a part shown by arrow 5 in FIG. 1. (first embodiment)

### EXPLANATION OF REFERENCE NUMERALS AND SYMBOLS

11 Vibration type compressor
17 Yoke pipe
18 Casing
19 Cylinder
21 Piston
22, 23 Resonance spring
22a, 23a Wire rod
24 Drive coil
24a, 24b End portion of drive coil
25 Yoke bottom
37 Permanent magnet
38 Core pole
53 Bobbin
54 Linking plate
61, 62 Terminal
61a, 62a Abutment connecting portion
61b, 62b Coil connecting portion
63, 64 Lead-holding part
65, 66, 67, 68, 69, 70, 71, 72 Projection

### MODES FOR CARRYING OUT THE INVENTION

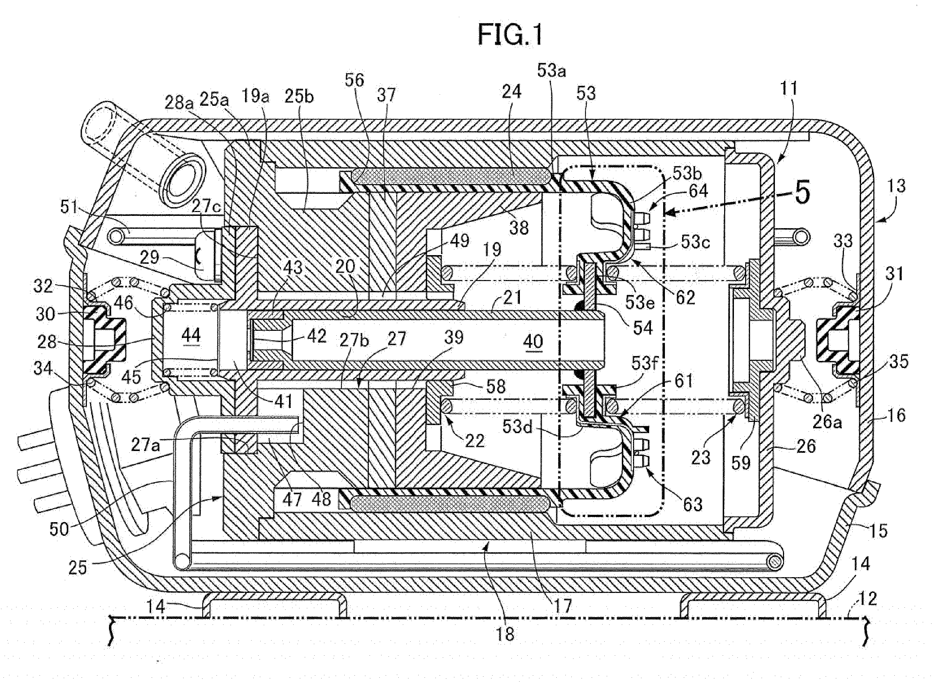

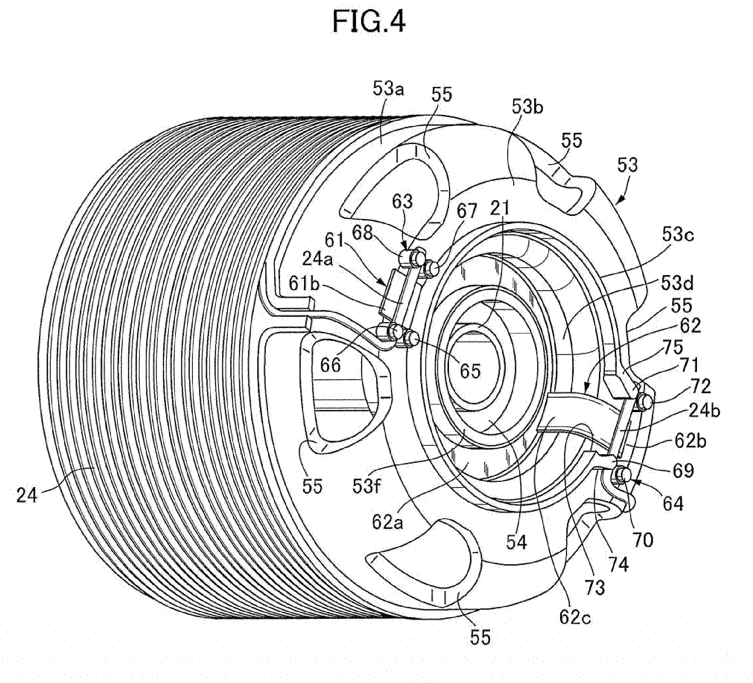

An embodiment of the present invention is explained below by reference to the attached FIG. 1 to FIG. 5.

### FIRST EMBODIMENT

First, in FIG. 1, a vibration type compressor 11 is housed within a container 13 placed in an appropriate position of a refrigerator body 12 as a compressor for a refrigerator mounted in a vehicle such as for example a truck or a bus. The container 13 is formed by welding a lower container half body 15 opening upward and an upper container half body 16 opening downward in a state in which an open end part of the upper container half body 16 is fitted within an open end part of the lower container half body 15, a pair of mounting brackets 14 being provided in a lower part of the lower container half body 15.

The vibration type compressor 11 includes a casing 18 having a cylindrical yoke pipe 17, a cylindrical cylinder 19 coaxially and fixedly provided in the casing 18, a piston 21 slidably fitted into a cylinder hole 20 of the cylinder 19, a pair of resonance springs 22 and 23 supporting the piston 21 on the casing 18 so as to be movable back and forth, and a drive coil 24 disposed coaxially with the piston 21 in a magnetic field and linked to the piston 21.

The casing 18 is formed from the yoke pipe 17, a yoke bottom 25 joined to one end part of the yoke pipe 17, and a lid 26 joined to the other end part of the yoke pipe 17.

The yoke bottom 25 is formed so as to integrally have a first flange portion 25a having its outer peripheral part fixed to one end of the yoke pipe 17 by press fitting, and a thick cylindrical portion 25b coaxially connected to the first flange portion 25a and coaxially inserted into the one end part of the yoke pipe 17. A through hole 27 is coaxially provided in the thick cylindrical portion 25b, this through hole 27 being formed from a large diameter hole portion 27a on the outer end side of the thick cylindrical portion 25b, and a small diameter hole portion 27b coaxially connected to the large diameter hole portion 27a while forming between itself and the large diameter hole portion 27a an annular step portion 27c facing outward.

The cylindrical cylinder 19 is inserted through the through hole 27, the cylindrical cylinder 19 having a second flange portion 19a inserted into the large diameter hole portion 27a of the through hole 27. Furthermore, a third flange portion 28a is provided integrally with a hat-shaped lid member 28 covering the cylinder 19 from the outside in the axial direction, the third flange portion 28a being inserted into an outer end part of the large diameter hole portion 27a of the through hole 27 so as to sandwich the second flange portion 19a between itself and the annular step portion 27c. A plurality of screw members 29 inserted through the third flange portion 28a and the second flange portion 19a are screwed into the thick cylindrical portion 25b of the yoke bottom 25, and tightening the screw members 29 fixes the second flange portion 19a, that is, the cylinder 19, to the yoke bottom 25 and fixes the third flange portion 28a, that is, the lid member 28, to the yoke bottom 25.

A first cushion holder 32 retaining a first cushion member 30, against which the lid member 28 can abut, is fixed by welding, etc. to an upper inner face of the lower container half body 15 on one end side in the longitudinal direction of the container 13, and a first suspension coil spring 34 is disposed between the first cushion holder 32 and the lid member 28.

A second cushion holder 33 retaining a second cushion member 31, against which a projecting portion 26a projectingly provided on an outer face of a central part of the lid 26 can abut, is fixed by welding, etc. to a lower inner face of the upper container half body 16 on the other end side in the longitudinal direction of the container 13, and a second suspension coil spring 35 is disposed between the second cushion holder 33 and the lid 26.

That is, the casing 18 of the vibration type compressor 11 is floatingly supported on the container 13 via the first and second suspension coil springs 34 and 35.

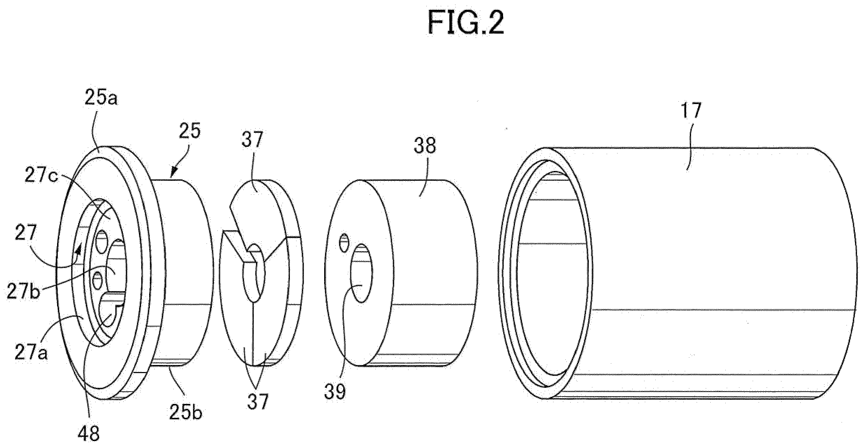

Referring in addition to FIG. 2, coaxially inserted into one end side of the yoke pipe 17 are the thick cylindrical portion 25b of the yoke bottom 25, a permanent magnet 37 for forming the magnetic field, and a core pole 38 holding the permanent magnet 37 between itself and the thick cylindrical portion 25b in the axial direction. The permanent magnet 37 is a dysprosium-less magnet and is divided into a plurality, for example three, in the peripheral direction, the divided magnet having a fan shape when viewed in a direction along the sliding direction of the piston 21. This is due to the difficulty of producing a hollow cylindrical magnet molding for the transverse magnetic field from a dysprosium-less magnet because of the characteristics of the magnetic material, although it is possible to produce a hollow cylindrical magnet, which is not divided relatively easily, for a magnet represented by a neodymium magnet, and the peripherally divided fan-shaped permanent magnet 37 is therefore employed.

Opposite faces of the permanent magnets 37 are bonded by means of an adhesive to the thick cylindrical portion 25b of the yoke bottom 25 and the core pole 38, respectively. Furthermore, the core pole 38 is provided with a center hole 39 having a hole diameter that corresponds to the small diameter hole portion 27b of the through hole 27 provided in the thick cylindrical portion 25b of the yoke bottom 25.

The cylinder 19 is disposed so as to extend through the thick cylindrical portion 25b of the yoke bottom 25, the permanent magnet 37, and the core pole 38. Furthermore, the piston 21 is formed into a cylindrical shape so as to form a flow path 40 in the central part, and is slidably fitted into the cylinder hole 20.

A pump chamber 41 is formed within one end part of the cylinder 19, one end part of the piston 21 facing the pump chamber 41, and a suction valve 42 disposed between the flow path 40 within the piston 21 and the pump chamber 41 is placed between the one end part of the piston 21 and a piston head 43 press fitted onto the one end part of the piston 21. This suction valve 42 opens in a suction step in which the piston 21 moves rightward in FIG. 1, and gas is sucked from the flow path 40 of the piston 21 into the pump chamber 41.

Furthermore, a discharge chamber 44 is formed within the hat-shaped lid member 28, the outer periphery of a discharge valve 45 disposed between the pump chamber 41 and the discharge chamber 44 is placed so that it can abut against one end of the cylinder 19, and a valve spring 46 urging the discharge valve 45 toward the valve-closed side is housed in the discharge chamber 44 so as to be disposed between the lid member 28 and the discharge valve 45. This discharge valve 45 opens in a discharge step in which the piston 21 moves leftward in FIG. 1 and gas is discharged from the pump chamber 41 to the discharge chamber 44.

A recess part 48 is provided in the thick cylindrical portion 25b of the yoke bottom 25 so as to open in the annular step portion 27c, the recess part 48 forming a low pressure chamber 47 between itself and the second flange portion 19a of the cylinder 19, and a passage 49 making the low pressure chamber 47 communicate with the interior of the casing 18 is formed between the outer periphery of the cylinder 19 and the thick cylindrical portion 25b, permanent magnet 37, and core pole 38. Furthermore, a low pressure pipe 50 guiding gas to the low pressure chamber 47 is provided so as to extend through the second flange portion 19a and the third flange portion 28a. Moreover, the discharge chamber 44 communicates with a high pressure chamber (not illustrated) formed within the thick cylindrical portion 25b of the yoke bottom 25, and a high pressure pipe 51 communicating with the high pressure chamber is connected to the thick cylindrical portion 25b.

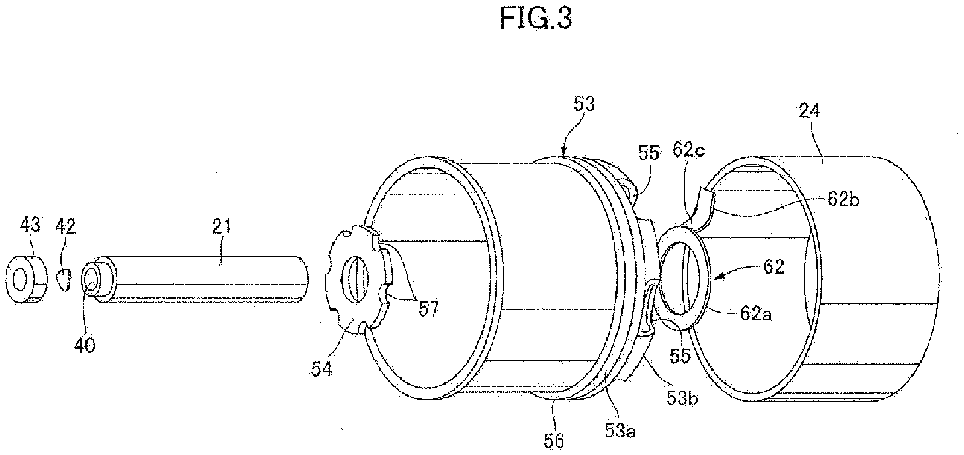

Referring in addition to FIG. 3 to FIG. 5, the drive coil 24 disposed coaxially with the piston 21 in the magnetic field is supported on a bobbin 53, made of a synthetic resin, coaxially surround by the yoke pipe 17, and a disk-shaped linking plate 54, made of a metal, is coaxially mold bonded to the bobbin 53, the linking plate 54 being fixedly provided on an end part, on the side opposite to the cylinder 19, of the piston 21 prior to being joined to the bobbin 53.

The bobbin 53 is formed so as to integrally have a cylindrical portion 53a coaxially disposed within the yoke pipe 17 and having one end part open, an annular plate portion 53b having its outer peripheral part connected to the other end part of the cylindrical portion 53a, an outward cylindrical portion 53c connected to the inner periphery of the annular plate portion 53b and projecting outward in the axial direction, an inward cylindrical portion 53d connected to the inner periphery of the annular plate portion 53b and extending inward in the axial direction, a collar portion 53e protruding radially inward from the inner end of the inward cylindrical portion 53d, and an inside cylindrical portion 53f projecting axially inward and outward from the inner periphery of the collar portion 53e, the thick cylindrical portion 25b of the yoke bottom 25, the permanent magnet 37 and the core pole 38 being inserted into the cylindrical portion 53a.

A part via which the cylindrical portion 53a and the annular plate portion 53b are connected and a part via which the annular plate portion 53b and the inward cylindrical portion 53d are connected are formed so as to have a roundness that protrudes outward. A plurality of, for example four, through holes 55 that allow gas to flow are formed at equal intervals in the peripheral direction in the part via which the cylindrical portion 53a and the annular plate portion 53b are connected.

An annular recess part 56 is formed in the outer periphery of the cylindrical portion 53a of the bobbin 53 so as to be biased toward one end side in the axial direction of the cylindrical portion 53a, and the drive coil 24 is wound around the outer periphery of the cylindrical portion 53a of the bobbin 53 so that part thereof is housed in the annular recess part 56.

The linking plate 54 is fixed by welding to an end part, on the side opposite to the cylinder 19, of the piston 21 prior to being joined to the bobbin 53, and a plurality of, for example six, recess parts 57 are formed in the outer periphery of the linking plate 54 at equal intervals in the peripheral direction. Moreover, the bobbin 53 is formed integrally with the piston 21 linked to the linking plate 54 by pouring in a synthetic resin in a state in which the linking plate 54 fixed to the piston 21 is set in a bobbin molding machine, and the linking plate 54 is coaxially mold bonded to the bobbin 53 so as to be embedded in the collar portion 53e of the bobbin 53.

Due to the linking plate 54 being mold bonded, the bobbin 53 is coaxially joined to the piston 21, and the first and second resonance springs 22 and 23 supporting the piston 21 on the casing 18 so as to be movable back and forth are disposed between the bobbin 53 and a spring receiving member 58 fixed to the core pole 38 and a spring receiving member 59 fixed to the lid 26 respectively.

A first terminal 61 connected to one end portion 24a of the drive coil 24 is mold bonded to the bobbin 53, the first terminal 61 having a first abutment connecting portion 61a against which the first resonance spring 22, which is made of a metal and functions as a conductive member, abuts. A second terminal 62 connected to the other end portion 24b of the drive coil 24 is joined to the bobbin 53, the second terminal 62 having a second abutment connecting portion 62a against which the second resonance spring 23, which is made of a metal and functions as a conductive member, abuts.

The first abutment connecting portion 61a is formed into a ring shape having a substantially L-shaped cross-sectional shape so as to abut against a face on the core pole 38 side of the collar portion 53e of the bobbin 53 and the outer periphery of a part of the inside cylindrical portion 53f projecting from the collar portion 53e toward the core pole 38 side. The first terminal 61 having the first abutment connecting portion 61a is mold bonded to the bobbin 53 so that part of the first terminal 61 is embedded in the bobbin 53 while making the first abutment connecting portion 61a face one side in the axial direction, which is the core pole 38 side of the bobbin 53.

The second abutment connecting portion 62a is formed into a ring shape having a substantially L-shaped cross-sectional shape so as to abut against a face, on the lid 26 side, of the collar portion 53e of the bobbin 53 and the outer periphery of a part of the inside cylindrical portion 53f projecting from the collar portion 53e toward the lid 26 side. The second terminal 62 having the second abutment connecting portion 62a is joined to the bobbin 53 while making the second abutment connecting portion 62a face the other side in the axial direction, which is the lid 26 side of the bobbin 53, by pushing in the second abutment connecting portion 62a between the inward cylindrical portion 53d and the inside cylindrical portion 53f of the bobbin 53.

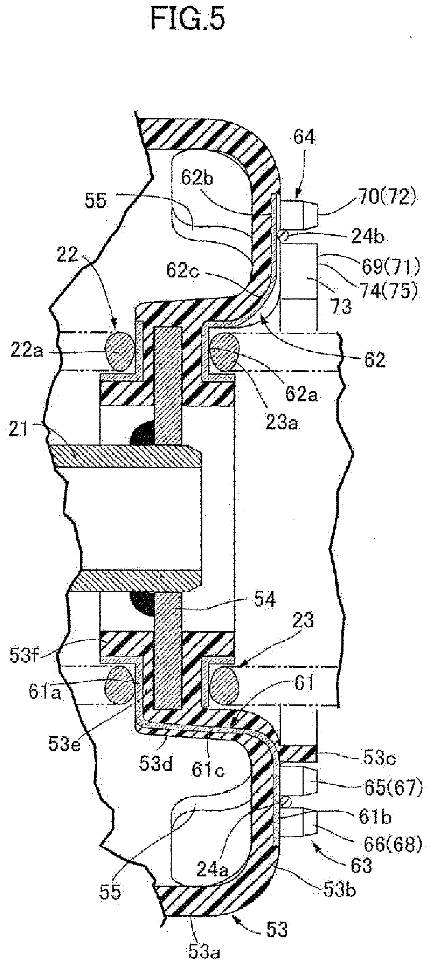

The first and second resonance springs 22 and 23 are coil springs formed by winding wire rods 22a and 23a into a coil, and the cross-sectional shape of the wire rods 22a and 23a is an egg shape or an elliptical shape as clearly shown in FIG. 5.

Two groups of lead-holding parts 63 and 64 formed from a plurality, at least a pair, of projections 65 to 68; 69 to 72 are provided on an outer face of the bobbin 53 so that the opposite end parts 24a and 24b of the drive coil 24 can be inserted thereinto and retained thereby. In this embodiment, the first lead-holding part 63 and the second lead-holding part 64 are provided on the annular plate portion 53b of the bobbin 53 so as to be positioned on one diameter of the bobbin 53 in the radially outward direction of the outward cylindrical portion 53c, the one end portion 24a of the drive coil 24 being pushed into and retained by the first lead-holding part 63, and the other end portion 24b of the drive coil 24 being pushed into and retained by the second lead-holding part 64.

The first lead-holding part 63 is formed by projectingly providing, on an outer face of the annular plate portion 53b, first and second projections 65 and 66 arranged in the radial direction of the bobbin 53 and forming a pair and third and fourth projections 67 and 68 arranged in the radial direction of the bobbin 53 at positions separated in the peripheral direction from the first and second projections 65 and 66 and forming a pair, and a gap is provided between the first and second projections 65 and 66 and between the third and fourth projections 67 and 68, which form the pairs, so that the one end portion 24a of the drive coil 24 can be inserted thereinto and retained.

Furthermore, the second lead-holding part 64 is formed by projectingly provided, on an outer face of the annular plate portion 53b, fifth and sixth projections 69 and 70 arranged in the radial direction of the bobbin 53 and forming a pair and seventh and eighth projections 71 and 72 arranged in the radial direction of the bobbin 53 at positions separated in the peripheral direction from the fifth and sixth projections 69 and 70 and forming a pair, and a gap is provided between the fifth and sixth projections 69 and 70 and between the seventh and eighth projections 71 and 72, which form the pairs, so that the other end portion 24b of the drive coil 24 can be inserted thereinto and retained. Moreover, a cutout 73 is provided in a portion, corresponding to the fifth and seventh projections 69 and 71, of the outward cylindrical portion 53c of the bobbin 53, and a linking wall part 74 joining the outward cylindrical portion 53c and the fifth projection 69 on one side of the cutout 73 and a linking wall part 75 joining the outward cylindrical portion 53c and the seventh projection 71 on the other side of the cutout 73 are formed on the bobbin 53 so as to be connected integrally with the annular plate portion 53b.

Formed on the first terminal 61 is a first coil connecting portion 61b that enables the one end portion 24a of the drive coil 24 retained by the first lead-holding part 63 to be joined thereto by soldering, the first coil connecting portion 61b being connected to the first abutment connecting portion 61a via a linking portion 61c embedded within the bobbin 53. The first coil connecting portion 61b is disposed at a position corresponding to the first lead-holding portion 63 so as to face an outer face of the annular plate portion 53b between the two groups of projections 65, 66; 67, 68 as pairs, that is, between the first and second projections 65 and 66 and between the third and fourth projections 67 and 68 of the first lead-holding portion 63.

On the other hand, formed on the second terminal 62 is a second coil connecting portion 62b that enables the other end portion 24b of the drive coil 24 retained by the second lead-holding part 64 to be joined thereto by soldering, the second coil connecting portion 62b being connected to the second abutment connecting portion 62a via a connecting arm portion 62c formed so as to curve at a position corresponding to the cutout 73 of the outward cylindrical portion 53c. The second coil connecting portion 62b is disposed at a position corresponding to the second lead-holding portion 64 so as to face an outer face of the annular plate portion 53b between the two groups of projections 69, 70; 71, 72 as pairs, that is, between the fifth and sixth projections 69 and 70 and between the seventh and eighth projections 71 and 72 of the second lead-holding portion 64.

In such a vibration type compressor 11, when alternating current is applied to the drive coil 24, the piston 21 moves back and forth in the axial direction together with the drive coil 24 according to the polarity of the alternating current, and the back and forth movement of the piston 21 is amplified by the first and second resonance springs 22 and 23. Due to the reciprocating movement, the piston 21 repeats the suction step and the discharge step within the cylinder 19; in the suction step the suction valve 42 is opened by virtue of suction by the pump chamber 41, and gas is taken from the low pressure pipe 50 via the low pressure chamber 47, the passage 49 and the interior of the casing 18 to the flow path 40 and then to the pump chamber 41, and in the subsequent discharge step the discharge valve 45 is opened by virtue of discharge by the pump chamber 41, and high pressure gas within the discharge chamber 44 is fed under pressure to the high pressure pipe 51 via the high pressure chamber.

The operation of this embodiment is now explained. Since the disk-shaped linking plate 54, which is made of a metal and is fixedly provided on an end part, on the side opposite to the cylinder 19, of the piston 21 prior to being joined to the bobbin 53, is coaxially mold bonded to the bobbin 53, which is made of a synthetic resin, supports the drive coil 24, and is coaxially surrounded by the cylindrical yoke pipe 17 of the casing 18, it is possible to easily enhance the coaxial precision between the piston 21 and the bobbin 53 supporting the drive coil 24, and it is unnecessary to carry out adjustment for improving the coaxial precision. Furthermore, since the bobbin 53 is made of a synthetic resin, it is unnecessary to employ an insulating member, which would be required if the bobbin were made of a metal, the number of components decreases, and the number of operating steps can be reduced due to an operation of assembling the insulating member being unnecessary. Moreover, in the case of a metallic bobbin there would be an eddy current loss within the metal due to electromagnetic field linkage by the drive coil 24, but it is possible to suppress the occurrence of such an eddy current loss.

Furthermore, since the pair of terminals 61 and 62 individually connected to the opposite end parts 24a and 24b of the drive coil 24 are joined to the bobbin 53 so that the abutment connecting portions 61a and 62a face opposite sides in the axial direction, the resonance springs 22 and 23, which are made of a metal and function as conductive members, abutting against the abutment connecting portions 61a and 62a, it is possible to easily ensure the passage of an electrical current to the drive coil 24.

Moreover, since the first and second lead-holding parts 63 and 64 formed from the plurality, at least a pair, of projections 65 to 68; 69 to 72 are provided on the outer face of the bobbin 53 so that the opposite end parts 24a and 24b of the drive coil 24 can be inserted thereinto and retained thereby, and the first and second coil connecting portions 61b and 62b, which are formed on the first and second terminals 61 and 62 respectively so that the end portions 24a and 24b of the drive coil 24 retained by the first and second lead-holding parts 63 and 64 can be joined by soldering, are disposed so as to correspond to the first and second lead-holding portions 63 and 64, when joining the opposite end parts 24a and 24b of the drive coil 24 to the pair of terminals 61 and 62 after completing winding of the drive coil 24 around the bobbin 53, it is unnecessary to bind the end portions 24a and 24b of the drive coil 24 using thread and it is possible to carry out the joining operation easily in a short period of time.

Moreover, since the permanent magnet 37 for forming the magnetic field is a dysprosium-less magnet, is a magnet divided into three in the peripheral direction, and is held in the axial direction between the yoke bottom 25 joined to one end part of the yoke pipe 17 and having part thereof inserted into the bobbin 53 and the core pole 38 disposed within the bobbin 53 so that the first resonance spring 22 is disposed between itself and the bobbin 53, and the cylinder 19 extends coaxially through the core pole 38, the permanent magnet 37 and the yoke bottom 25, and is fixed to the yoke bottom 25, it is possible to reduce the radial dimension of the casing 18 by making it unnecessary to ensure that there is a space having a large dimension in the radial direction of the casing 18 for disposing the permanent magnet 37.

Furthermore, since the first and second resonance springs 22 and 23 are coil springs formed from the wire rods 22a and 23a having an egg-shaped or elliptical cross section, it is possible to decrease the maximum stress occurring in the wire rods 22a and 23a when they flex compared with one having a circular cross section, which makes it possible to shorten the axial length of the resonance springs 22 and 23, thus contributing to making the axial dimension of the vibration type compressor 11 small.

An embodiment of the present invention is explained above, but the present invention is not limited to the above embodiment and may be modified in a variety of ways as long as the modifications do not depart from the spirit and scope thereof.

## Claims

1. A vibration type compressor including a casing (18) that has a cylindrical yoke pipe (17), a cylindrical cylinder (19) that is coaxially and fixedly provided in the casing (18), a piston (21) that is slidably fitted into the cylinder (19), a pair of resonance springs (22, 23) that support the piston (21) on the casing (18) so as to be movable back and forth, and a drive coil (24) that is disposed coaxially with the piston (21) in a magnetic field and is linked to the piston (21), **characterized in that** a disk-shaped linking plate (54) made of a metal and fixedly provided on an end part, on a side opposite to the cylinder (19), of the piston (21) prior to being joined to a bobbin (53) is coaxially mold bonded to the bobbin (53), made of a synthetic resin, supporting the drive coil (24), and coaxially surrounded by the yoke pipe (17), and a pair of terminals (61, 62) that have an abutment connecting portion (61a, 62a) and are individually connected to opposite end parts of the drive coil (24) are joined so that the abutment connecting portions (61a, 62a) face opposite sides in an axial direction of the bobbin (53), the resonance springs (22, 23), which are made of metal, functioning as a conductive member and abutting against the abutment connecting portions (61a, 62a) respectively.

2. The vibration type compressor according to Claim 1, wherein two groups of lead-holding parts (63, 64) formed from a plurality, at least a pair, of projections (65, 66, 67, 68; 69, 70, 71, 72) are provided on an outer face of the bobbin (53) so that opposite end parts (24a, 24b) of the drive coil (24) can be inserted into and retained by the lead-holding parts (63, 64), and a coil connecting portion (61b, 62b) is disposed so as to correspond to the lead-holding portions (63, 64), the coil connecting portion (61b, 62b) being formed on each of the pair of terminals (61, 62) so that the end portion (24a, 24b) of the drive coil (24) retained by the lead-holding part (63, 64) can be joined by soldering to the coil connecting portion (61b, 62b).

3. The vibration type compressor according to Claim 1 or Claim 2, wherein a permanent magnet (37) for forming the magnetic field is a dysprosium-less magnet and is held in the axial direction between a yoke bottom (25) and a core pole (38), the yoke bottom (25) being joined to one end part of the yoke pipe (17) and having part thereof inserted into the bobbin (53) and the core pole (38) being disposed within the bobbin (53) so that one of the pair of resonance springs (22, 23) is disposed between the core pole (38) and the bobbin (53), and the cylinder (19) extends coaxially through the core pole (38), the permanent magnet (37) and the yoke bottom (25) and is fixed to the yoke bottom (25).

4. The vibration type compressor according to any one of Claims 1 to 3, wherein the resonance spring (22, 23) is a coil spring formed from a wire rod (22a, 23a) having an egg-shaped or elliptical cross section.
